# EUROPÄISCHE PATENTSCHRIFT

(11) **EP 1 319 898 B1**
(45) Veröffentlichungstag und Bekanntmachung des Hinweises auf die Patenterteilung: **18.10.2006**
(21) Anmeldenummer: 02450277.5
(22) Anmeldetag: 06.12.2002
(51) Int. Cl.: F24D 10/00, F24D 3/10

(54) **Im Boden verlegte Rohrleitung für eine Fernwärmeanlage**
Pipe-line laid in the ground for district heating
Conduit de distribution enterré pour chauffage urbain

(30) Priorität: 11.12.2001 AT 19332001
(43) Veröffentlichungstag der Anmeldung: 18.06.2003
(73) Patentinhaber: KE-KELIT Kunststoffwerk Gesellschaft m.b.H., A-4017 Linz (AT)
(72) Erfinder: Halada, Lucian, Ing., 4040 Linz (AT); Grabler, Joachim, Ing., 7512 Kirchfidisch (AT); Leiminger, Jürgen, Ing., 8045 Graz-Andritz (AT)
(74) Vertreter: Hübscher, Helmut

(56) Entgegenhaltungen:
- EP-A- 0 538 538
- RU-C- 2 182 215

## Beschreibung

Die Erfindung bezieht sich auf einen Rohrgraben für eine im Boden verlegte Rohrleitung, insbesondere für eine Fernwärmeanlage, mit Leitungsrohren, die in einer mit Sand verfüllten Leitungszone des Rohrgrabens eingebettet sind.

Rohrleitungen für strömende Medien werden üblicherweise in Rohrgräben verlegt, die in einer sich von der Rohrgrabensohle bis über den Rohrscheitel erstreckenden Leitungszone eine Sandverfüllung aufweisen. Ein solcher Rohrgraben ist in der europäischen Patentanmeldung EP 0 538 538 A gezeigt. An diese Sandverfüllung werden besondere Anforderungen hinsichtlich der Reibungsverhältnisse gegenüber dem äußeren Rohrmantel und der Verdichtbarkeit gestellt, weil von diesen Parametern die statischen und dynamischen Beanspruchungen der verlegten Rohrleitung maßgebend abhängen. Um diesen Anforderungen zu genügen werden üblicherweise feinkörnige Quarzsande zur Verfüllung der Leitungszone eingesetzt, die nach einer sorgfältigen Verdichtung mit einem Mindestverdichtungsgrad von 97% mit einem Oberbau überdeckt werden, der den ursprünglichen Zustand wiederherstellen soll. Da die Sandverfüllung der Leitungszone insbesondere bei höheren Feuchtigkeitsgehalten eine vergleichsweise hohe Wärmeleitfähigkeit in der Größenordnung von 1,2 bis 1,8 W/m°K aufweist, können die dadurch bedingten Wärmeverluste der Rohrleitungen von Fernwärmeanlagen nur durch eine entsprechende Verbesserung der Wärmedämmung der Leitungsrohre verringert werden. Die üblicherweise stählernen Leitungsrohre, die zur Wärmedämmung und zum Korrosionsschutz mit einem Dämmstoff und einem Mantelrohr umhüllt sind, sind somit zur besseren Wärmedämmung mit einem dickeren Wärmedämmantel zu versehen, was nicht nur den Herstellungsaufwand erhöht, sondern auch die Außendurchmesser der Leitungs-rohre mit der Folge vergrößert, daß die Abmessungen des Rohrgrabens entsprechend angepaßt werden müssen.

Der Erfindung liegt somit die Aufgabe zugrunde, einen Rohrgraben für eine im Boden verlegte Rohrleitung der eingangs geschilderten Art so auszugestalten, daß Wärmeverluste der Rohrleitung durch eine Wärmeabgabe in den umgebenden Boden deutlich verringert werden können, ohne die sonst mit einer Verbesserung der Wärmedämmung der Leitungsrohre verbundenen Nachteile in Kauf nehmen zu müssen.

Die Erfindung löst die gestellte Aufgabe dadurch, daß zumindest 50 Gew.% der Sandverfüllung der Leitungszone aus gebranntem Ton bestehen.

Durch den erfindungsgemäßen Einsatz einer Sandverfüllung der Leitungszone mit einem zumindest hälftigen Anteil an gebranntem Ton können die Wärmedämmeigenschaften der Sandverfüllung erheblich verbessert werden, ohne die mechanischen Anforderungen an eine solche Sandverfüllung zu gefährden. Da somit die Sandverfüllung als zusätzliche Wärmedämmung für die Rohrleitung wirksam wird, ergeben sich für die in dieser Weise verlegten Rohrleitungen günstige Wärmeverhältnisse. Dies gilt nicht nur für Leitungsrohre ohne wärmedämmenden Mantel, sondern insbesondere auch für Leitungsrohre mit einem eine Wärmedämmung bildenden Mantel. Die Leitungsrohre mit einer eigenen Wärmedämmung können nämlich eine vergleichsweise dünnere Isolierung aus geschäumtem Kunststoff aufweisen, ohne erhöhte Wärmeverluste in Kauf nehmen zu müssen. Die wärmedämmenden Eigenschaften des gebrannten Tons bringen außerdem eine Steigerung der Temperatur im Bereich der Leitungszone mit sich, was zu einer verstärkten Trocknung feuchter Sandverfüllungen und damit zu einer Verbesserung der Wärmedämmung dieser Leitungszonen führt, weil mit der Feuchtigkeit auch die Wärmeleitfähigkeit der Sandverfüllung abnimmt. Dazu kommt noch, daß die Mindestabmessungen des für die Verlegung erforderlichen Rohrgrabens aufgrund der geringeren Wärmedämmung des Rohrmantels und der damit verbundenen Beschränkung des Außendurchmessers der wärmegedämmten Leitungsrohre vergleichsweise klein gehalten werden können, was nicht nur die Verlegungsarbeiten erleichtert, sondern auch die erforderliche Menge der Sandverfüllung herabsetzt. Unter gebranntem Ton wird die dehydratisierte, calcinierte Form natürlicher Tonerdemineralien verstanden, die im wesentlichen aus Aluminium- und Eisensilicaten bestehen. Als gebrannter Ton kann erfindungsgemäß zerkleinerter Abfall aus Ziegelfabriken verwendet werden. Es ist aber auch möglich, hiefür Abraumlagerstätten aus Kohlebergwerken heranzuziehen, wenn ein entsprechender Anteil an Tonerdemineralien vorhanden ist und der Restkohlenstoff zur Calcinierung der Tonerdemineralien unter starker Erhitzung verbrannt wird, was auf natürliche Art durch Selbstentzündung oder durch ein künstliches Brennen erfolgen kann.

Da die Wärmedämmeigenschaften der Sandverfüllung der Leitungszone mit dem Anteil an gebranntem Ton steigt, empfiehlt es sich, je nach den gegebenen Verhältnissen den Anteil an gebranntem Ton zu steigern. Weist die Sandverfüllung einen Anteil an gebranntem Ton von 80 bis 100 Gew.% auf, so werden im allgemeinen allen Anforderungen hinsichtlich der Wärmedämmung und der statischen und dynamischen Belastbarkeit entsprechende Bedingungen sichergestellt.

Damit der ungünstige Einfluß der Feuchtigkeit der Sandverfüllung auf das Wärmedämmverhalten zusätzlich verringert werden kann, kann der Anteil der Sandverfüllung an gebranntem Ton vorzugsweise mit einem Siliconöl hydrophobiert werden. Durch eine solche Hydrophobierung wird die Aufnahmefähigkeit der Tonbestandteile für Feuchtigkeit entscheidend herabgesetzt, was sich unmittelbar in einer Verringerung der Wärmeleitfähigkeit auswirkt.

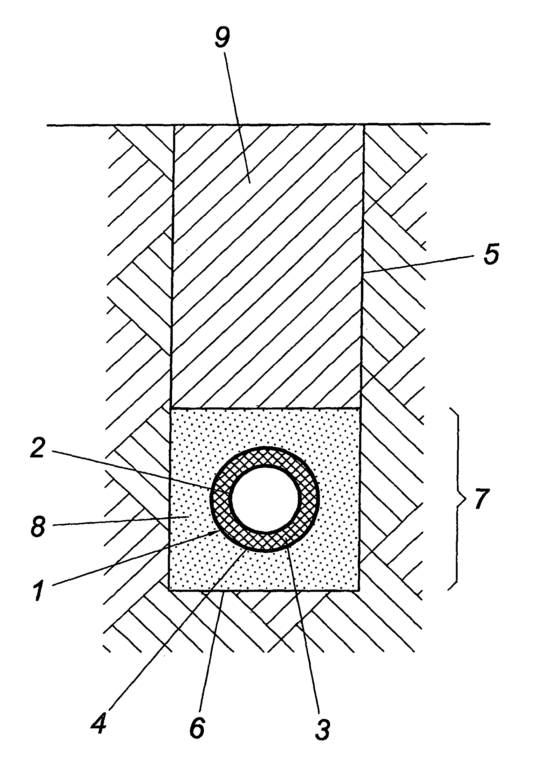

In der Zeichnung ist der Erfindungsgegenstand beispielsweise dargestellt, und zwar wird ein Rohrgraben für eine im Boden verlegte Rohrleitung für eine Fernwärmeanlage in einem schematischen Querschnitt gezeigt.

Gemäß dem dargestellten Ausführungsbeispiel ist die Rohrleitung für die Fernwärmeanlage aus Leitungsrohren 1 zusammengesetzt, die aus einem stählernen Rohr 2, einer Wärmedämmschicht 3 aus geschäumtem Kunststoff und einem Mantelrohr 4 aus Kunststoff bestehen. Diese Leitungsrohre 1 sind in einem Rohrgraben 5 mit Abstand oberhalb der Grabensohle 6 in einer Leitungszone 7 verlegt, die sich von der Grabensohle 6 über den Rohrscheitel von Grabenwand zu Grabenwand erstreckt. In dieser Leitungszone 7 sind die Leitungsrohre 1 in einer Sandverfüllung 8 eingebettet, die sorgfältig verdichtet wird, um entsprechende statische und dynamische Belastungen aufnehmen zu können.
Auf diese Sandverfüllung 8 wird eine Überdeckung 9 entsprechend dem ursprünglichen oder einem gewünschten Oberbau aufgebracht.

Zum Unterschied von herkömmlichen Rohrleitungen dieser Art besteht die Sandverfüllung 8 in der Leitungszone 7 jedoch nicht im wesentlichen aus Quarzsand, sondern zumindest hälftig aus gebranntem Ton, der eine an einen feinkörnigen Quarzsand angepaßte Körnung aufweist, um den mechanischen Anforderungen zu genügen. Aufgrund der Porosität des gebrannten Tons kann die Wärmeleitfähigkeit der Sandverfüllung 8 im Vergleich zu Quarzsand erheblich herabgesetzt werden. Während die Wärmeleitfähigkeit von feuchtem Quarzsand, wie er üblicherweise für diesen Zweck eingesetzt wird, mit einem durchschnittlichen Wert λ= 1,2 bis 1,8 W/m°K gemessen werden kann, beträgt der Wert der Wärmeleitfähigkeit für gebrannten Ton λ = 0,7 bis 0,9 W/m°K. Da mit den verbesserten Wärmedämmeigenschaften der Sandverfüllung 8 die Temperatur im Bereich der Leitungszone 7 steigt, können die unvermeidbaren Wärmeverluste zum Trocknen feuchter Sandverfüllungen 8 genützt werden, was zu einer Senkung der Wärmeleitfähigkeit der Sandverfüllung 8 und damit zu erheblich verbesserten Wärmedämmeigenschaften der Leitungszone 7 führt. Um eine geringere Wärmeleitfähigkeit der trockenen Sandverfüllung 9 vorteilhaft nützen zu können, empfiehlt es sich außerdem, die Sandverfüllung 8 zu hydrophobieren, wofür sich Siliconöle vorteilhaft eignen, die allenfalls in Form einer Emulsion auf den gebrannten Ton aufgesprüht werden.

Die verbesserten Wärmedämmeigenschaften der Leitungszone 7 können sowohl für Leitungsrohre 1 mit und ohne wärmedämmendem Mantel genützt werden. Für Leitungsrohre ohne wärmedämmenden Mantel ergibt sich eine sonst nicht mögliche Wärmedämmung durch die einen entsprechenden Anteil an gebranntem Ton aufweisende Sandverfüllung 8, während sich die Wärmedämmung für Leitungsrohre mit einem wärmedämmenden Mantel entsprechend erhöht.

## Patentansprüche

1. Rohrgraben für eine im Boden verlegte Rohrleitung, insbesondere für eine Fernwärmeanlage, mit Leitungsrohren (1), die in einer mit Sand verfüllten Leitungszone (7) des Rohrgrabens (5) eingebettet sind, **dadurch gekennzeichnet, daß** zumindest 50 Gew.% der Sandverfüllung (8) der Leitungszone (7) aus gebranntem Ton bestehen.

2. Rohrgraben nach Anspruch 1, **dadurch gekennzeichnet, daß** die in der Sandverfüllung (8) mit einem Anteil an gebranntem Ton von wenigstens 50 Gew.% verlegten Leitungsrohre (1) einen eine Wärmedämmung bildenden Mantel aufweisen.

3. Rohrgraben nach Anspruch 1 oder 2, **dadurch gekennzeichnet, daß** die Sandverfüllung (8) einen Anteil an gebranntem Ton von 80 bis 100 Gew.% aufweist.

4. Rohrgraben nach einem der Ansprüche 1 bis 3, **dadurch gekennzeichnet, daß** die Sandverfüllung (8) vorzugsweise durch ein Siliconöl hydrophobiert ist.

## Claims

1. Pipe trench for an underground pipeline, particularly for a district heating system, with conduit pipes (1) which are embedded in a sand-filled embedment zone (7) of the pipe trench (5), **characterised in that** at least 50% by weight of the sand filling (8) of the embedment zone (7) consists of burnt clay.

2. Pipe trench according to claim 1, **characterised in that** the conduit pipes (1) laid in the sand filling (8) with a proportion of burnt clay of at least 50% by weight comprise a jacket forming thermal insulation.

3. Pipe trench according to claim 1 or 2, **characterised in that** the sand filling (8) comprises a proportion of burnt clay of 80 to 100% by weight.

4. Pipe trench according to one of the claims 1 to 3, **characterised in that** the sand filling (8) is preferably made water-repellent by a silicone oil.

## Revendications

1. Fouille pour tuyauterie, pour une tuyauterie posée dans le sol, en particulier pour une installation de chauffage urbain, avec des tubes de canalisation (1), incorporés dans une zone de canalisation (7), remplie de sable, de la fouille pour tuyauterie (5), **caractérisée en ce qu'**au moins 50 % en poids du remplissage en sable (8) de la zone de canalisation (7) est formé d'argile cuite.

2. Fouille pour tuyauterie selon la revendication 1, **caractérisée en ce que** les tubes de canalisation (1) posés dans le remplissage en sable (8), comprenant une proportion d'argile cuite d'au moins 50 %, présentent une enveloppe formant isolation thermique.

3. Fouille pour tuyauterie selon la revendication 1 ou 2, **caractérisée en ce que** le remplissage en sable (8) présente une proportion d'argile cuite de 80 à 100 % en poids.

4. Fouille pour tuyauterie selon l'une des revendications 1 à 3, **caractérisée en ce que** le remplissage en sable (8) est de préférence rendu hydrophobe grâce à une huile de silicone.
